# EUROPEAN PATENT SPECIFICATION

(11) **EP 3 832 804 B1**
(45) Date of publication and mention of the grant of the patent: **26.06.2024**
(21) Application number: 20212326.1
(22) Date of filing: 07.12.2020
(51) Int. Cl.: H01R 4/52, H01R 11/09

(54) **CONNECTION DEVICE FOR CONDUCTORS FOR CABLES**
ANSCHLUSSVORRICHTUNG FÜR LEITER FÜR KABEL
DISPOSITIF DE CONNEXION DE CONDUCTEURS POUR CÂBLES

(30) Priority: 05.12.2019 IT 201900023043
(43) Date of publication of application: 09.06.2021
(73) Proprietor: Portas, Francesco, 15028 Quattordio Alessandria (IT)
(72) Inventor: Portas, Francesco, 15028 Quattordio Alessandria (IT)
(74) Representative: De Tullio, Michele Elio

(56) References cited:
- US-A- 2 222 493
- US-A- 5 278 353
- US-A1- 2002 173 206
- US-A1- 2014 273 610

## Description

### Field of the Invention

The present invention refers to a device for connecting a cable conductor to a connector. In particular, the present invention refers to a connector device for connecting two cable conductors to a connector.

### Present status of the art

Nowadays, the connections for accessories used in a distribution network are very important in terms of electric power transportation safety.

Accordingly, during the operation the connections of the conductor and the accessories must have a level of safety equal to that of the cable.

Generally speaking, at the connection of a conductor, in order to obtain voltage drops and heating as lowest as possible, a low and constant electric resistance is requested, as well as a sufficient mechanical resistance, also taken into consideration the short-circuit strength, and a good corrosion resistance.

In addition, it is significant not only to rely on a simple and safe installation, but also on the substantial absence of maintenance for the whole service life.

Conductor connections are typically either of removable or permanent type.

Removable connections usually use fixing screw devices in the broadest sense of the term, such as screw sockets, threaded terminals, compact locking rings, terminals for direct connection, V-shaped terminals, etc.

Permanent connections are divided into two types, namely: thermal connection and mechanical connection.

Thermal connection might be of brazing type, useful for joining metal materials by way of a flux, and of welding type, which is preferred for connecting aluminum-based conductors, with two different versions. In open welding V-shaped bent conductors are welded by using a hydrogen-oxygen reducing flame with a slight excess of hydrogen, adding wires made from pure aluminum. This kind of welding requires fully qualified operators, otherwise error sources might arise. The other version includes the thermal procedure of aluminum, wherein a fusion in a mold is made in few seconds with a great thermal effect and using an appropriate oxide as reagent. The low conductivity and porosity of the alloy is compensated for by a thicker cross-section.

The mechanical connection is often of a compression type: considering the aspects of thermal processes in implementing connections, compression technique is presently used more and more frequently. As a matter of fact, the hexagonal compression has been proved to be valid in the different possibilities of channeled and circular engraving molding, as well as in that by way of punching. This all-side conductor forming system which forms the conductor as a hexagon is valid for all conductor shapes.

Another technique for obtaining compression connections is that which does not use presses for performing the compression, but uses screws having a predetermined engrave, which provides the possibility to accommodate in one and the same connector conductors with a plurality of diameters, in contrast with what happens with the above-mentioned systems.

The following are some patent documents concerning cable connection devices.

In the patent document US 2014/0273610 A1 a cable connector includes a body member having a first opening to receive a cable and a second opening. An indicator is received in the second opening and is movable between exposed and unexposed positions. A magnet is disposed in the body member and is aligned with the second opening. A support member is movable between first and second positions. When the support member is in the first position, the support member is disposed between the magnet and the indicator such that the indicator is in the exposed position. When the support member is in the second position the support member is withdrawn from between the magnet and the indicator such that the magnet moves the indicator to the unexposed position to indicate full insertion of the cable.

The patent document US 5,278,353 illustrates an improved cable splice of the type in which first and second ends of a casing taper conically toward the casing's longitudinal axis. First and second cable-receiving apertures are provided in the respective first and second ends of the casing. A first set of cable-gripping jaws is disposed within the first end of the casing; and a second set of cable-gripping jaws is disposed within the second end of the casing. At least one spring is provided within the casing, between the jaws, to urge the first and second jaws toward the first and second apertures respectively. A first plug is positioned within the inner end of the first set of jaws to bias the first set of jaws against the spring by forcing the jaws radially outwardly. A second plug is positioned within the inner end of the second set of jaws to bias the second set of jaws against the spring by forcing the jaws radially outwardly. The plugs are free of connection to the jaws. This allows the plugs to be displaced from the jaws by passage of a member such as a cable through one of the apertures to contact the plug. Displacement of the plugs from the jaws relieves the aforesaid biasing and permits the spring to urge the jaws along the axis toward the apertures as aforesaid.

The patent document US 2002/0173206 A1 illustrates an electrical splice connector comprising a frame, at least one set of cooperating wedge members movably mounted to the frame, and a first spring connected between a first one of the wedge members and the frame. The wedge members have opposing sides adapted to contact opposite sides of an electrical conductor. The spring extends at least partially along a length of the first wedge member.

US 2 222 493 A illustrates a further connector device having the features of the preamble of appended claim 1.

In the systems implemented both with removable connections and by compression, contact resistance is a decisive characteristic in terms of connection quality which, actually, is not always optimal.

An object of the present invention is to solve prior art drawbacks in such a way as to provide a connection system for connecting a connector to a conductor which is safe, easy to install, and features a good mechanical resistance.

### Summary of the invention

The present invention refers to a connector device as that set forth in claim 1.

This way, a device capable of implementing an automatic self-locking clamping of the conductor into the connector, i.e. without using auxiliary devices, can be obtained.

According to a preferred embodiment, said conductor elements are cable conductors for electric energy transportation, from low voltage to high voltage, for instance from 1 Volt to 1000 kV.

According to an alternative preferred embodiment, said conductor elements are rope or round bar conductors, made from a metal or plastic material, such as, steel ropes comprising single elementary wires or strands, with or without a coating made from a plastic film, for instance from polyamide, polyurethane, polyethylene or the like, or also coatings made from synthetic paint.

In the following description of the invention, when we make reference to an element or part component of the connector device according to the present invention, which aids to lock one of the first or second conductors to the connector device itself, we also make reference to, even if not expressly specified, a similar element or part component of the connector device according to the present invention which helps to lock the other of the first or second conductor to the connector device itself. Therefore, when we make reference to an element or part component present in the first cavity of the connector device according to the present invention, we automatically also make reference to a similar element or part component present in the second cavity of the connector device itself.

According to the invention, said connector device also comprises, internally thereto, in each of said first and second cavities, a plurality of guide elements arranged along the inner wall of said main body featuring a substantially cylindrical shape and suitable for angularly guiding a corresponding second wedge-shaped movable element.

This way, the guide elements makes the angular movement of the wedge-shaped movable elements easier.

According to the invention, said guide elements are suitable for angularly guiding said corresponding second wedge-shaped movable element under an angle in the range from about 5° to about 15°.

According to the invention, said connector device also comprises internally thereto, in each of said first and second cavities, at least one containment cage interposed between said guide elements and locked therebetween, and suitable for axially guiding each of said second wedge-shaped movable elements along the longitudinal direction of the connector device.

This way, the containment cage, suitable for accommodating the conductor when it is inserted in a cavity of the device according to the present invention, is locked between the guide elements and makes the axial movement of the wedge-shaped movable elements easier.

According to a preferred embodiment, said plurality of second wedge-shaped movable elements are arranged radially about the inner side wall of the main body of the connector device according to the present invention.

This way, the plurality of said second wedge-shaped movable elements allow to lock the conductor, thus obtaining a certain concentricity between the conductor and the connector device.

According to the invention, said first movable element is a piston suitable for axially moving along the longitudinal direction of the conductor device.

According to a preferred embodiment, said connector device also comprises, internally thereto, at each of said first and second cavities, at least one thrust element suitable for being activated by said piston, or by elements activable by said piston and integral with each other.

According to the invention, said thrust element is provided with a plurality of arms, wherein each of said arms is capable of activating the movement of a corresponding said second wedge-shaped movable element.

According to a preferred embodiment, said arms are arranged radially around the longitudinal axis of said thrust element.

This way, once the piston directly or indirectly through integral elements activates said thrust element one of said arms will be able to push a corresponding wedge-shaped movable element arranged along a first portion of the inner wall of the main body of the connector device according to the present invention and, simultaneously, others of said arms will be able to push other corresponding wedge-shaped movable elements arranged along other portions of the inner wall of the main body of the connector device according to the present invention.

According to a preferred embodiment, said connector device also comprises internally thereto at least one housing enclosed between said first movable element (piston) and said thrust element suitable for being filled with grease or another chemical component featuring an appropriate viscosity.

This way, they prevent corrosive effects and humidity migration between conductor and connector from taking place.

According to the invention, said connector device also comprises, internally thereto, at each of said first and second cavities, at least one elastic element suitable for being accommodated in a corresponding seat and at least one containment element which, following said translatory movement of said piston, is suitable for moving from a first rest position, wherein said at least one containment element holds said at least one elastic element locked in said corresponding seat, to a second position wherein said elastic element is released from said seat.

According to a preferred embodiment, each of said at least one elastic element is a spring, a gas piston, or a similar device.

According to a preferred embodiment, each of said at least one containment element is a pin or plug.

This way, each spring is hold compressed in its seat by the action exerted by a pin; in said position, each spring accumulates energy.

As the pin translates, the spring is not in such a position to remain compressed in its seat any longer, and is thus able to go out therefrom, thus releasing he accumulated energy.

According to the invention, said at least one elastic element, once released from said seat when said containment element is in said second position, is able to transfer the accumulated force to said thrust element when it was compressed in said seat.

This way, the thrust element is able to act, by way of at least each of said plurality of its arms, on the corresponding wedge-shaped movable elements.

According to a preferred embodiment, three of said containment elements are present, radially arranged at 120° from each other.

According to a preferred embodiment, said first conductor and said second conductor have substantially the same diameter.

According to another preferred embodiment, said first conductor and said second conductor have diameters which are different from each other.

This way, the device allows for two conductors, irrespective of their diameter, to be joined to each other; as a matter of fact, it is possible to join both conductors featuring the same diameter and conductors featuring different diameters from each other, thus covering a wide range of possibilities that different conductors can be joined.

According to a preferred embodiment, said wedge-shaped movable elements have a surface that is substantially convex suitable for coming into contact with the inner wall of the main body featuring a substantially cylindrical shape.

According to a preferred embodiment, said wedge-shaped movable elements also have a substantially concave surface suitable for coming into contact with the conductor.

According to other preferred embodiments, said wedge-shaped movable elements have two different adjacent surfaces suitable for coming into contact with the conductor.

According to further preferred embodiments, said wedge-shaped movable elements have one or two different surfaces suitable for coming into contact with the conductor, wherein the roughness of at least one of said contact surface (Ra-micrometers) ranges from 3 micrometers to 200 micrometers.

According to further preferred embodiments, said wedge-shaped movable elements have one or two different surfaces suitable for coming into contact with the conductor, wherein at least one of said contact surfaces has a mechanical machining of a thread type the thread crest depth of which ranges from 0.05 mm to 1 mm, preferably from 0.1 mm to 1 mm, even more preferably from 0.1 mm to 0.5 mm.

According to a preferred embodiment, said wedge-shaped movable elements have a substantially flat surface suitable for coming into contact with said thrust element.

According to a preferred embodiment, said wedge-shaped movable elements have sliding and guiding grooves suitable for interacting with said sliding cage.

Other advantages and characteristics of the system according to the present invention will be apparent from the following detailed description of a number of embodiments which are illustrated for explanatory, non-limitative purposes, and with special reference to the accompanying drawings and figures, in which:
- Figure 1 shows, in an axonometric view, a connector device, and two cable conductors to be joined through the connector under consideration;
- Figure 2 shows, in an axonometric view, the two conductors and the connector device depicted in Figure 1 connected to each other;
- Figure 3 is a cross sectional view along the longitudinal axis of an embodiment of a connector device according to the present invention;
- Figure 4 shows a detail of the connector device depicted in Figure 3;
- Figure 5 shows another detail of the connector device depicted in Figure 3;
- Figure 6 is an axonometric view of a detail of the thrust elements of the connector device depicted in Figure 3;
- Figure 7 is an exploded view of a portion of the connector device depicted in Figure 3;
- Figure 8 is a view of the mechanical clamping of the wedge-shaped movable elements of the connector device according to the present invention on the conductor;
- Figures 9a and 9b show two axonometric views of an embodiment of a wedge-shaped movable element of the connector device according to the present invention;
- Figures 10a-10d show four different embodiments of the wedge-shaped movable element of the connector device according to the present invention.

### Detailed description of the invention

The following detailed description refers to a preferred embodiment of a connector device in accordance with the present invention.

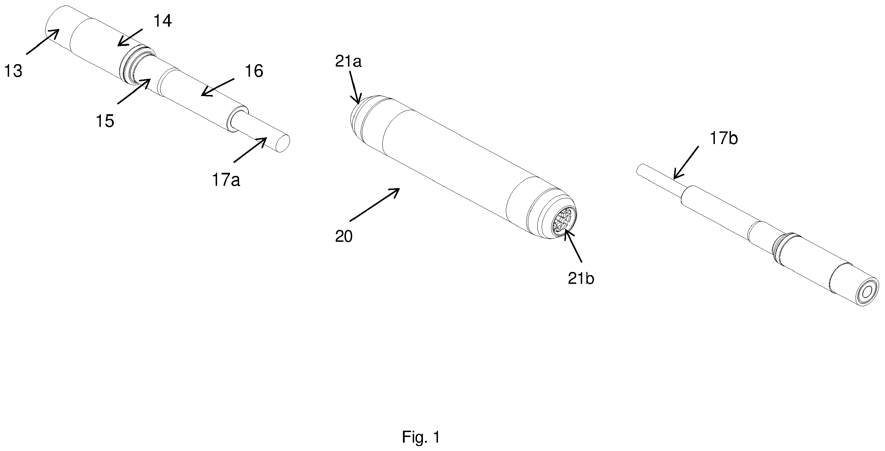

Fig. 1 shows the cable conductor 17a, having a diameter of 18 mm, and the cable conductor 17b, having a diameter of 11 mm; the figure also shows the connector 20 preset for joining the two conductors 17a and 17b.

The figure also shows the cable protection outer sheath 13, a cable metal shield 14, a cable semiconductive layer 15, and a primary insulator 16.

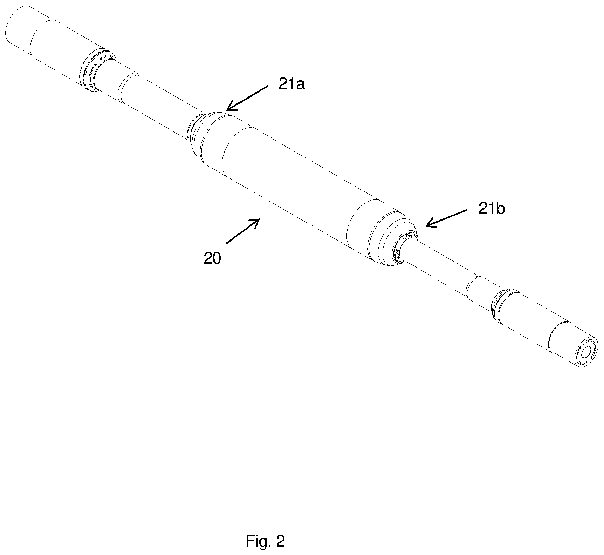

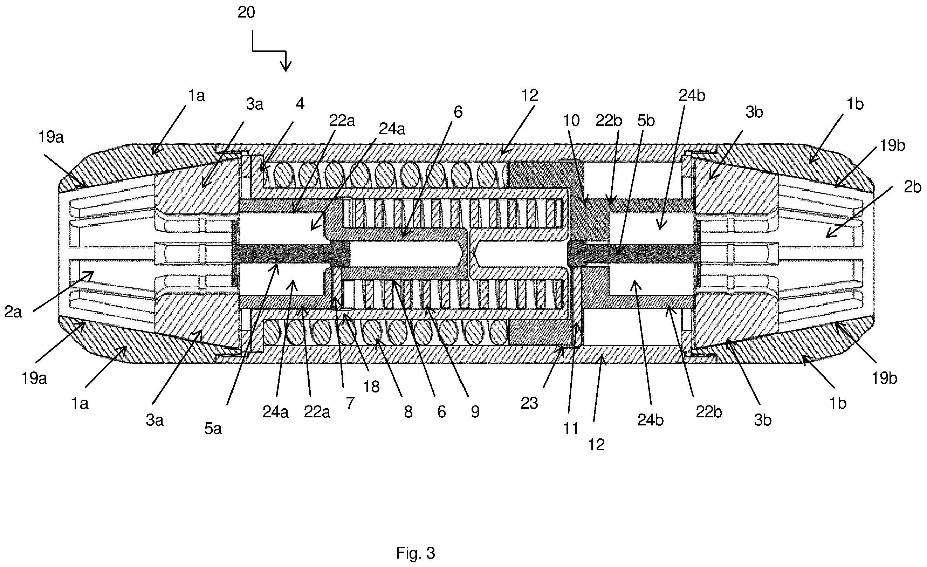

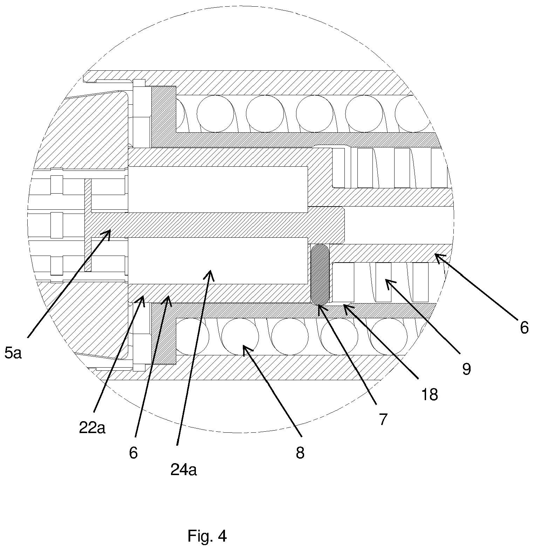

In order to be able to join the cables by way of the connector 20, the first conductor 17a is inserted in a first cavity of the connector 20, at its first end 21a, whereas the second conductor 17b is inserted in the second cavity of the connector 20, at its second end 21b in order to obtain the joining shown in Fig. 2. As shown in Fig. 3, and in details also in Figs. 4-8, the connector device 20 comprises a main body featuring a substantially cylindrical shape internally thereto including a first cavity, which is accessed from the first end 21a of the main body, and a second cavity, symmetric to the first cavity, which is accessed from the second end 21b of the main body, opposed to the first end 21a. Each of the two cavities is preset for accommodating the corresponding conductor 17a or 17b thereinto.

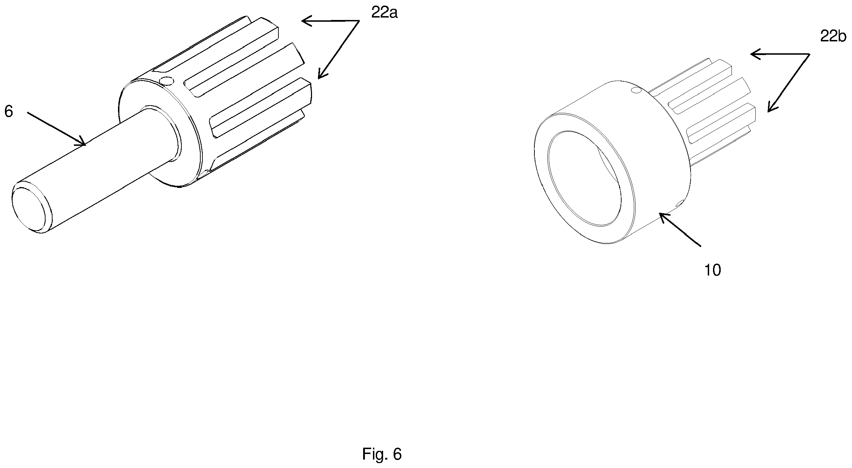

When the first conductor 17a is inserted into the corresponding cavity of the connector 20, it comes into contact with a piston 5a and pushes the latter which moves, with a translatory motion, towards the inside of the cavity. The translatory motion of the piston 5a causes the movement of three pins 7, radially arranged at 120° to each other and accommodated in the rest position in the housing 18, which cause a plurality of springs 9 to release from a special containment seat 4 where the springs 9 were compressed. Releasing the springs 9 from its corresponding seat 4 causes the release of the energy accumulated when the springs 9 were compressed in their corresponding seat 4. This released energy causes a displacement of one thrust element 6 provided with a plurality of arms or prominences 22a (shown in details in Fig. 6), each of which pushes on a corresponding wedge-shaped movable element 3a helping its sliding along the corresponding inclined plane 19a until the plurality of wedge-shaped movable elements 3a lock the first conductor 17a therebetween. This way, each wedge-shaped element 3a is pushed by the corresponding arm 22a of the thrust element 6,

The sliding of the wedge-shaped movable elements 3a along the corresponding inclined plane 19a is facilitated by the presence of corresponding guide elements 1a arranged along opposed portions of the inner wall of the main body of the connector device 20. The guide elements 1a angularly guide the wedge-shaped movable elements 3a under a guide angle of approximately 8°.

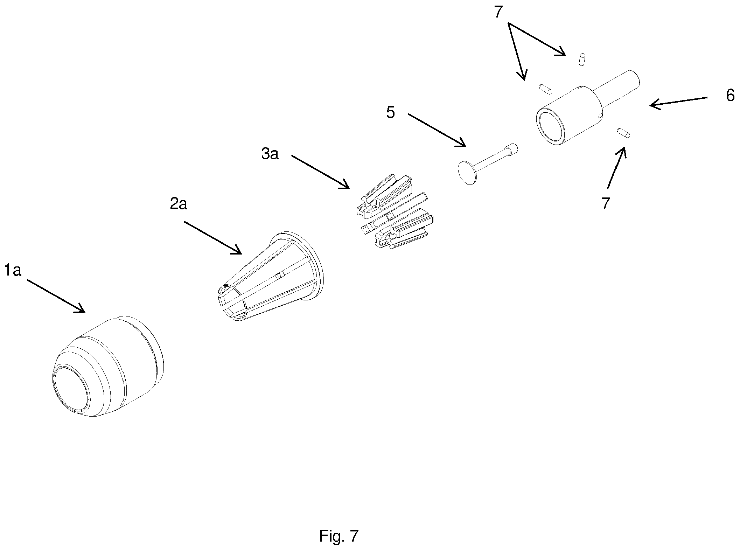

Also, inside the cavity of the connector 20 there is a containment cage 2a, which is interposed between the plurality of guide elements 1a and locked therebetween. As shown in the exploded view of Fig. 7, the containment cage 2a, thus locked, allows to axially guide each wedge-shaped movable element 3a along the longitudinal direction of the connector device 20.

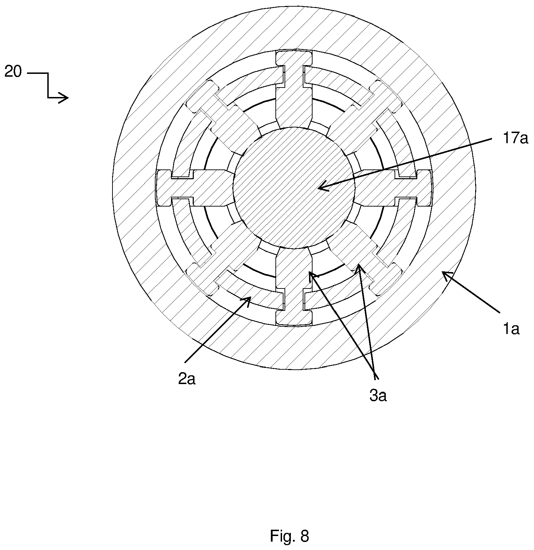

The operation of clamping the cable conductor 17a to the connector 20 is thus effectively accomplished. As a matter of fact, Figure 8 shows an embodiment according to the present invention wherein the conductor 17a is mechanically locked by a plurality (eight, in this case) of wedge-shaped movable elements 3a of the connector device 20, arranged radially around the conductor 17a. This way, a clamping is obtained featuring a good mechanical strength, as well as a given concentricity, between the conductor 17a and the connector device 20.

In addition, the housing 24a enclosed between the piston 5a and the thrust element 6 is filled with grease, or another chemical component featuring an appropriate viscosity, in order to prevent corrosive effects and humidity migrations between the conductor 17a and the conductor 20 from taking place.

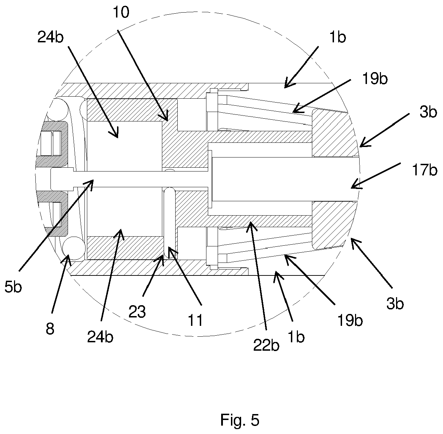

Likewise (see detail in Fig. 5), when the second cable conductor 17b is inserted into the opposed cavity of the connector 20 in correspondence with the end 21b, it pushes the piston 5b which, as a result, determines the three pins 11, radially arranged at 120° from each other and accommodated in the rest position in the housing 23, to slide, thus releasing the spring 8 from their seats. So, the springs 8 cause the thrust element 10 to be moved which, in turn, through a plurality of arms 22b (see in detail Fig. 6) moves the corresponding wedge-shaped movable elements 3b along the corresponding inclined plane 19b, until they lock the second conductor 17b therebetween. The guide elements 1b angularly guide the wedge-shaped movable elements 3b under a guide angle of about 8°, whereas the containment cage 2b, interposed between the guide elements 1b and locked therebetween, allows to axially guide the wedge-shaped movable elements 3b along the longitudinal direction of the connector device 20. The joining element 12 allows to join the guide elements 1a to the guide elements 1b. The housing 24b enclosed between the piston 5b and the thrust element 10 is filled with grease, or another chemical component featuring an appropriate viscosity, in order to prevent corrosive effects and humidity migrations between the conductor 17b and the connector 20 from taking place.

This way the cable conductor 17b is clamped to the connector 20, thus obtaining a good mechanical strength between the two elements, namely conductor and connector.

In this example, the connector 20 is devised for joining two electric cables, while being capable of connecting even a plurality of dimensions of the diameter of the conductors 17a, 17b, which ranges from 11 to 18mm.

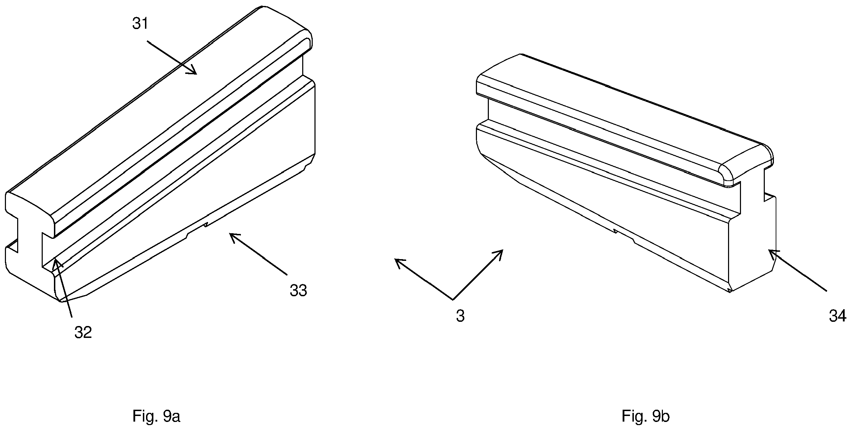

Figures 9a and 9b show two axonometric views of an embodiment of a wedge-shaped movable element, specified with the reference numeral 3 in its whole, of the connector device 20 according to the present invention. These figures show that the wedge-shaped movable element 3 has a substantially convex surface 31 which comes into contact with the inner wall of the main body featuring a substantially cylindrical shape of the connector 20, and a substantially concave surface 33 which comes into contact with the conductor 17a, 17b. Also, it includes a sliding groove 32 suitable for interacting with the sliding cage 2a, 2b and a substantially flat surface 34 which comes into contact with the thrust element 6, 10.

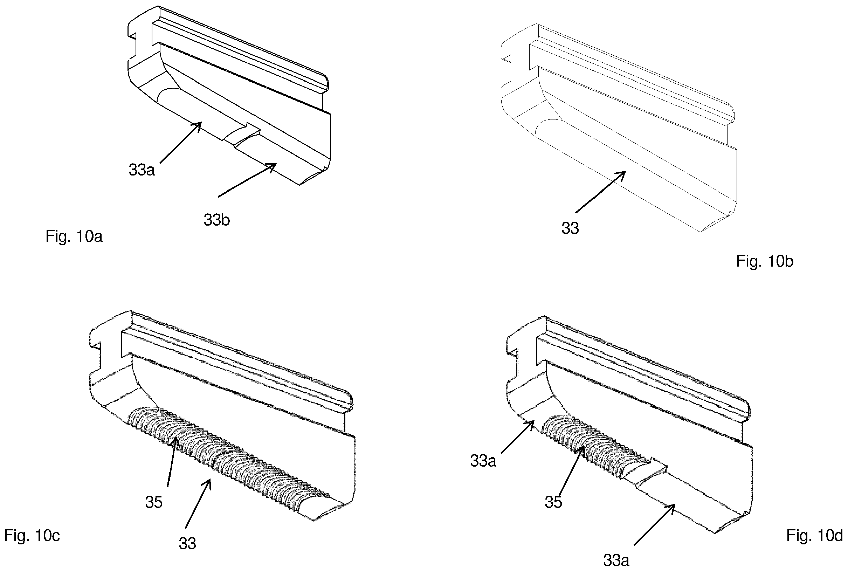

Figures 10a-10d show four different embodiments of the wedge-shaped movable element 3 of the connector device 20 in accordance with the present invention.

Figure 10a shows the substantially concave contact surface 33 which comes into contact with the conductor 17a, 17b including two different contact surfaces 33a and 33b, adjacent to each other, featuring a roughness (Ra-micrometers) ranging from 3 micrometers to 200 micrometers.

Figure 10b shows the substantially concave contact surface 33 which comes into contact with the conductor 17a, 17b which is a sole contact surface 33a and 33b, featuring a roughness (Ra-micrometers) ranging from 3 micrometers to 200 micrometers.

Figure 10c shows the substantially concave contact surface 33 which comes into contact with the conductor 17a, 17b which is a sole contact surface 33a and 33b, featuring a mechanical machining of a thread type having a thread crest depth 35 ranging from 0.2 mm to 1 mm.

Figure 10d shows the substantially concave contact surface 33 which comes into contact with the conductor 17a, 17b including two different contact surfaces 33a and 33b, adjacent to each other, wherein the contact surface 33a features a mechanical machining of a thread type having a thread crest depth 35 ranging from 0.2 mm to 1 mm.

For instance, the above detailed description refers to a conductor device for electric cables, but the present invention is not limited to that particular type of conductor, but it refers to any other type of conductor, such as for instance rope or rounded bar conductor elements, made from a metal or plastic material, such as for instance, ropes made from steel comprising single elementary wires or strands, with or without a coating made from a plastic film, for instance of polyamide, polyurethane, polyethylene or the like, or also coatings made from synthetic paints.

Also, the above-described embodiment refers to a connector device provided with a number (eight) of wedge-shaped movable elements, but other embodiments of the invention might comprise any other number of wedge-shaped elements, suitable for this purpose.

Therefore, the present invention is not limited to the above-described embodiments, provided for exemplary, non-limitative purposes only, but on the contrary, it is defined by the following claims.

## Claims

1. A connector device (20) for connecting at least two conductor elements (17a, 17b), wherein said connector device (20) comprises a main body featuring a substantially cylindrical shape internally thereto including a first cavity, which is accessed from a first end (21a) of the main body, suitable for allowing the insertion of a first conductor (17a) thereinto, and a second cavity which is accessed from a second end (21b) of the main body, opposed to said first end (21a), suitable for allowing the insertion of a second conductor (17b) thereinto to be joined to said first conductor (17a), wherein said main body contains internally thereto, in each of said first and second cavities, a first movable element (5a, 5b) being a piston and capable of being moved axially along the longitudinal direction of the connector device toward the inside of its corresponding cavity, following the insertion of one of said first or second conductors (17a, 17b) thereinto from the outside, and at least a plurality of second wedge-shaped movable elements (3a, 3b) suitable for being activated by said first movable element (5a, 5b) or by elements activable by it, integrally therebetween, wherein every element of said second wedge-shaped movable elements (3a, 3b) is capable of sliding along a corresponding inclined plane (19a, 19b) inside said cavity until said plurality of second wedge-shaped movable elements (3a, 3b) are capable of locking said first or second conductor (17a, 17b) therebetween, and a plurality of guide elements (1a, 1b), arranged along the inner wall of said main body featuring a substantially cylindrical shape and suitable for angularly guiding a corresponding second wedge-shaped movable element (3a, 3b) under an angle of from about 5° to about 15°, also comprising internally thereto, in each of said first and second cavities, a containment cage (2a, 2b) interposed between said guide elements (1a, 1b) and locked therebetween, and suitable for axially guiding each of said second wedge-shaped movable elements (3a, 3b) along a longitudinal direction of the connector device,
and at least one elastic element (9) suitable for being accommodated in a corresponding seat (4),
**characterized by further comprising** internally thereto, at each of said first and second cavities, at least one thrust element (6, 10) suitable for being activated by said first movable element (5a, 5b), or by elements activable by said first movable element (5a, 5b) and wherein said at least one thrust element (6, 10) is provided with a plurality of arms (22a, 22b), wherein each of said arms (22a, 22b) is capable of activating the movement of a corresponding said second wedge-shaped movable element (3a, 3b), and at least one containment element (7, 11) which, following the translatory movement of said first movable element (5a, 5b), is suitable for moving from a first rest position, wherein said at least one containment element (7, 11) holds said at least one elastic element (9) locked in said corresponding seat (4), to a second position wherein said elastic element (9) is released from said seat (4), and is capable of transferring the force accumulated by it, when compressed in said seat (4), to said thrust element (6, 10).

2. The connector device according to claim 1 wherein said arms (22a, 22b) are arranged radially about the longitudinal axis of said thrust element (6, 10) and wherein said wedge-shaped movable elements (3a, 3b) are arranged radially about the longitudinal axis of said main body of the connector device.

3. The connector device according to claim 2 wherein three of said containment elements (7, 11) are present, radially arranged at 120° from each other.

4. The connector device according to any of the claims 2-3 and further comprising at least one housing (24a, 24b) enclosed between said first movable element (5a, 5b) and said thrust element (6, 10) and suitable for being filled with grease or another chemical component featuring an appropriate viscosity.

## Patentansprüche

1. Anschlussvorrichtung (20) zum Verbinden von mindestens zwei leitfähigen Elementen (17a, 17b), wobei die Anschlussvorrichtung (20) einen Hauptkörper mit einer im Wesentlichen zylindrischen Form im Inneren und einem ersten Hohlraum umfasst, der von einem ersten Ende aus (21a) des Hauptkörpers zugänglich ist, der das Einführen eines ersten Leiters (17a) in sein Inneres ermöglicht, und einen zweiten Hohlraum, der von einem zweiten Ende (21b) des Hauptkörpers gegenüber dem ersten Ende (21a) zugänglich ist und geeignet ist, um das Einführen eines zweiten Leiters (17b) in sein Inneres zu ermöglichen, der mit dem ersten Leiter (17a) verbunden werden soll, wobei der Hauptkörper in seinem Inneren in jedem der ersten und zweiten Hohlräume ein erstes bewegliches Element (5a, 5b) enthält, d. h. einen Kolben, der nach dem Einführen eines der ersten oder zweiten Leiter (17a, 17b) von innen nach außen axial entlang der Längsrichtung der Anschlussvorrichtung in das Innere ihres entsprechenden Hohlraums bewegt werden kann, und mit mindestens mehreren zweiten beweglichen Elementen (3a, 3b) in Form eines Keils, die geeignet sind, durch das erste bewegliche Element (5a, 5b) oder durch integral dazwischen angeordnete Elemente, die durch dieses betätigt werden können, betätigt zu werden, wobei jedes Element der keilförmigen zweiten beweglichen Elemente (3a, 3b) entlang einer jeweiligen geneigten Ebene (19a, 19b) innerhalb des Hohlraums gleiten kann, bis die mehreren zweiten keilförmigen beweglichen Elemente (3a, 3b) in der Lage sind, den ersten oder zweiten Leiter (17a, 17b) zwischen diesen zu blockieren, und mit einer Vielzahl von Führungselementen (1a, 1b), die entlang der Innenwand des Hauptkörpers angeordnet sind und eine im Wesentlichen zylindrische Form haben und geeignet sind, um ein entsprechendes keilförmige zweite bewegliche Element (3a, 3b) mit einem Winkel zwischen etwa 5° und etwa 15°, ferner umfassend darin, in jedem der ersten und zweiten Hohlräume, einen dazwischen angeordneten Sicherheitskäfig (2a, 2b) von Führungselementen (1a, 1b) und dazwischen blockierten Elementen, die zur axialen Führung jedes der zweiten keilförmigen beweglichen Elemente (3a, 3b) entlang einer Längsrichtung der Verbindungseinrichtung geeignet sind, und mindestens mit einem elastischen Element (9), das dazu geeignet ist in einem entsprechenden Sitz (4) untergebracht sein,
**dadurch gekennzeichnet, dass** es außerdem im Inneren in jedem der ersten und zweiten Hohlräume mindestens ein Schubelement (6, 10) enthält, das geeignet ist, durch das erste bewegliche Element (5a, 5b) oder durch Elemente, die mittels des ersten beweglichen Elements (5a, 5b) aktiviert werden können und wobei das mindestens eine Schubelement (6, 10) mit einem Vielzahl von Armen (22a, 22b) versehen ist, wobei jeder der Arme (22a, 22b) in der Lage ist, die Bewegung eines entsprechenden zweiten keilförmigen beweglichen Elements (3a, 3b) Keils zu aktivieren,
und mit mindestens einem Einschlusselement (7, 11), das der Translationsbewegung des ersten beweglichen Elements (5a, 5b) folgend dazu geeignet ist, sich aus einer ersten Ruheposition zu bewegen, in der das mindestens einzelne Einschlusselement (7, 11) das mindestens eine elastische Element (9) in dem entsprechenden Sitz (4) blockiert hält, bis zu einer zweiten Position, in der das elastische Element (9) von demselben Sitz (4) gelöst wird und in der Lage ist, die von ihm akkumulierte Kraft, wenn er im Inneren des Sitzes (4) zusammengedrückt wird, auf das Schubelement (6, 10) zu übertragen.

2. Anschlussvorrichtung nach Anspruch 1, wobei die Arme (22a, 22b) radial um die Längsachse des Schubelements (6, 10) angeordnet sind und wobei die beweglichen keilförmigen Elemente (3a, 3b) radial um die Längsachse des Hauptkörpers der Anschlussvorrichtung angeordnet sind.

3. Anschlussvorrichtung nach Anspruch 2, wobei drei der Einschlusselemente (7, 11) vorhanden sind, die radial im Winkel von 120° zueinander angeordnet sind.

4. Anschlussvorrichtung nach einem der Ansprüche 2 bis 3, außerdem mindestens ein Gehäuse (24a, 24b) umfassend, das zwischen dem ersten beweglichen Element (5a, 5b) und dem Schubelement (6, 10) eingeschlossen ist und in der Lage ist, mit einem Fett oder einer anderen chemischen Komponente geeigneter Viskosität gefüllt zu werden.

## Revendications

1. Dispositif connecteur (20) pour connecter au moins deux éléments conducteurs (17a, 17b), dans lequel ledit dispositif connecteur (20) comprend un corps principal ayant une forme sensiblement cylindrique à l'intérieur et avec une première cavité, accessible depuis une première extrémité (21a) du corps principal, adaptée pour permettre l'insertion d'un premier conducteur (17a) à l'intérieur de celui-ci, et une deuxième cavité accessible depuis une deuxième extrémité (21b) du corps principal, opposée à ladite première extrémité (21a), adaptée pour permettre l'insertion d'un deuxième conducteur (17b) à l'intérieur, à joindre audit premier conducteur (17a), dans lequel ledit corps principal contient à l'intérieur, dans chacune desdites première et deuxième cavités, un premier élément mobile (5a, 5b), c'est-à-dire un piston susceptible d'être déplacé axialement le long de la direction longitudinale du dispositif connecteur vers l'intérieur de sa cavité correspondante, suite à l'insertion de l'un desdits premier ou deuxième conducteurs (17a, 17b) de son intérieur vers l'extérieur, et avec au moins une pluralité de deuxièmes éléments mobiles (3a, 3b) en forme de coin, aptes à être actionnés par ledit premier élément mobile (5a, 5b) ou par des éléments pouvant être actionnés par celui-ci, intégralement interposés, dans lequel chaque élément desdits deuxièmes éléments mobiles (3a, 3b) en forme de coin est apte à coulisser le long d'un plan incliné respectif (19a, 19b) à l'intérieur de ladite cavité, jusqu'à ce que ladite pluralité de deuxièmes éléments mobiles (3a, 3b) en forme de coin sont capables de bloquer ledit premier ou deuxième conducteur (17a, 17b) entre ceux-ci, et avec une pluralité d'éléments de guidage (1a, 1b), disposés le long de la paroi interne dudit corps principal ayant une forme sensiblement cylindrique et adaptés pour angulairement guider un deuxième élément mobile (3a, 3b) en forme de coin avec un angle compris entre environ 5° et environ 15°, comprenant en outre à l'intérieur, dans chacune desdites première et deuxième cavités, une cage de confinement (2a, 2b) placée entre lesdits éléments de guidage (1a, 1b) et bloqués entre ceux-ci, et aptes à guider axialement chacun desdits éléments mobiles (3a, 3b) en forme de coin le long d'une direction longitudinale du dispositif connecteur, et au moins un élément élastique (9) apte à être logé dans un siège (4) correspondant,
**caractérisé en ce qu'**il comporte en outre en son intérieur, dans chacune desdites première et deuxième cavités, au moins un élément de poussée (6, 10) destiné à être activé par ledit premier élément mobile (5a, 5b) ou par des éléments pouvant être activés au moyen dudit premier élément mobile (5a, 5b), et dans lequel ledit au moins un élément de poussée (6, 10) est pourvu d'un ensemble de bras (22a, 22b), chacun desdits bras (22a, 22b) étant capable d'activer le mouvement d'un deuxième élément mobile correspondant (3a, 3b) en forme de coin,
et avec au moins un élément de confinement (7, 11), qui, suite au mouvement de translation dudit premier élément mobile (5a, 5b), est apte à se déplacer à partir d'une première position d'appui, dans laquelle ledit au moins un élément de confinement (7, 11) fixe ledit au moins un seul élément élastique (9) bloqué dans ledit siège (4) correspondant, jusqu'à une deuxième position dans laquelle ledit élément élastique (9) est libéré du même siège (4) et est en mesure de transférer la force accumulée par celui-ci, lorsqu'il est comprimé à l'intérieur dudit siège (4), jusqu'audit élément de poussée (6, 10).

2. Dispositif connecteur selon la revendication 1, dans lequel lesdits bras (22a, 22b) sont disposés radialement autour de l'axe longitudinal dudit élément de poussée (6, 10) et dans lequel lesdits éléments mobiles (3a, 3b) en forme de coin sont disposés radialement autour de l'axe longitudinal dudit corps principal du dispositif connecteur.

3. Dispositif connecteur selon la revendication 2, dans lequel sont présents trois desdits éléments de confinement (7, 11), disposés radialement à 120° l'un de l'autre.

4. Dispositif connecteur selon l'une des revendications 2 à 3 et comprenant en outre au moins un boîtier (24a, 24b) enfermé entre ledit élément mobile (5a, 5b) et ledit élément de poussée (6, 10) et apte à être rempli avec une graisse ou avec un autre composant chimique ayant une viscosité appropriée.
